# EUROPEAN PATENT APPLICATION

(11) **EP 1 748 058 A1**
(43) Date of publication of application: **31.01.2007**
(21) Application number: 05425568.2
(22) Date of filing: 29.07.2005
(51) Int. Cl.: C09D 5/00, C09D 5/03

(54) **Method of preparing powder paints**

(71) Applicant: Pulverit S.p.A., 20157 Milano MI (IT)
(72) Inventor: Montesano, Cesare, 20052 Monza (MI) (IT)
(74) Representative: Coggi, Giorgio

(57) **Abstract**

A method is described for preparing a powder paint (with the colour and in the amount required each time to meet specific requirements) starting from a "base" powder paint obtained by dry mixing of various powder components, homogenization of the mixed components by hot extrusion and micronization of the homogenized material, which comprises at least the functional steps of:
- picking the amounts of "base" powder paint and colouring pigments required to obtain the colour and the amount of powder paint required by the client; and
- thermally fixing (preferably by heat fixing and simultaneous shaking) the colouring pigments to the grains of "base" powder paint;

The "base" powder paint can be produced immediately prior to picking the amount to which the colouring pigments are to be fixed thermally.

## Description

The present invention refers to a method of preparing a powder paint, with the colour and in the amount desired each time to meet a specific requirement, by modifying the colour of a powder paint (obtained in a known manner by dry mixing of the various components in powder form, homogenization of the mixed components by hot extrusion and micronization of the homogenized material) though the addition of colouring pigments thermally fixed to the grains of powder paint.

It is well consolidated, common practice to prepare a liquid paint by mixing together two or more liquid paints, each of which can be transparent, have a base colour (for example: black, white or a shade of red, yellow or blue) or a combination of two or more base colours.

A sample of liquid paint thus prepared is applied to a support and (preferably) made to dry to check that the colour obtained coincides with the desired colour; if necessary, the prepared paint is corrected by adding thereto suitable amounts of one or more base colours (and/or combinations thereof), applied to a support, dried, (possibly) further corrected and so on until the desired paint is obtained.

Devices known as colour mixers have long been known are widely available at the premises of traders in this sector (wholesalers and retailers). Said devices make it possible to determine (according to the characteristics of the base colours and/or combinations thereof available each time) the composition of the mixture of base colours (and/or combinations thereof) that must be made to obtain the desired paint, which can also be made on a retail basis in the amount (even very small, for example 1-2 litres) required by the purchaser.

A liquid paint can therefore be made in the amount required by the purchaser, by mixing two or more base colours (and/or combinations thereof) and correcting it, even a number of times, in a simple and cheap manner until the desired colour is obtained.

Preparation of a powder paint, in the colour and amount required by the purchaser, on a case by case basis, changing the colour of an existing powder paint (hereinafter called base paint) has thus far proved a long, complex and costly operation.

By way of non-limiting example, in the present description, the expression "base paint" indicates a ready-to-use transparent or semi-coloured powder (white, black, green, red, blue, brown, grey, yellow or orange).

In fact it is not possible to produce a powder paint by simply mixing together two or more base paints since the base paints consist of coloured grains which do not merge together and are of such a size (typically 20-70µm) as to be perceived by an observer as separate patches of colour: in fact said grains are too big to be able to be "blended" together by the observer's eye and/or brain.

In order to produce a powder paint the various powder components are normally mixed together dry, extruded hot to homogenize them and the homogenized material is ground ("micronized") to reduce it to a suitable size to be applied in a per se known manner to a support and form thereon an even layer of colour.

If the colour of the powder paint obtained by the above process is not that required by the client, it is often necessary to discard the powder paint thus produced and make a new powder paint "from scratch"; even when it is possible to correct a powder paint by mixing therewith one or more further components, it is necessary homogenize said mixture by extrusion and "micronize" the homogenized material.

The mixing-homogenization-micronization sequence must be repeated each time the colour of a powder paint is changed, with decidedly high production times and costs, especially if the amount to be produced is very small.

The object of the present invention is to produce a method of preparing powder paints that is able to overcome the above drawbacks; this object is achieved by means of a method that has the characterizing elements illustrated in claim 1.

Further advantageous characteristics of the invention form the subject matter of the dependent claims.

The method for preparing powder paints according to the present invention provides for the colour of a "base" paint to be modified by adding colouring pigments - whose grains are (typically) smaller than 5 µm in size and in any case of such a size as not to be perceived by an observer as separate patches of colour - fixed thermally (for example by means of heat fixing and simultaneous shaking) to the grains of the "base" paint.

As already mentioned earlier, the expression "base paint" indicates an already available (for example in stock) transparent or semi-coloured powder paint with a read-to-use grain size or prepared by means of the above mixing, homogenization and micronization process before adding colouring pigments thereto.

The "base" paint modified with the addition of colouring pigments is subjected to the process of dry mixing, homogenization by means of extrusion and micronization previously described.

The method of the present invention therefore comprises at least the following functional steps:
- picking (for example from a storehouse) of the amounts of existing powder paints and colouring pigments necessary to obtain the colour and amount of powder paint required by the client; and
- mixing and thermally fixing (preferably by means of heat fixing and simultaneous shaking) the colouring pigments to the grains of the existing powder paint.

This method presents the considerable economic advantage of not requiring the grains of powder paint bearing the colouring pigments to be homogenized by means of hot extrusion and subsequently micronized.

The abovementioned method can also comprise the functional step of making the "base" paint immediately prior to picking of the amount to which the colouring pigments are to be fixed thermally.

The amounts of powder paint and pigments to be picked to obtain the colour and amount of powder paint required by the client can be determined by means of "colour mixers" substantially the same as those used for liquid paints.

Without departing from the scope of the invention, a person skilled in the art can make to the method of preparing a powder paint previously described all the changes and improvements suggested by normal experience and/or the natural evolution of the art.

## Claims

1. A method of preparing a powder paint starting from a "base" powder paint obtained by dry mixing of the various powder components, homogenization by hot extrusion of the mixed components and micronization of the homogenized material, **characterized in that** the colour of the "base" powder paint is modified by adding colouring pigments fixed thermally to the grains of the "base" powder paint.

2. A method according to claim 1, **characterized in that** the colouring pigments fixed thermally to the grains of the "base" powder paint are of such a size as not to be perceived by an observer as separate patches of colour.

3. A method according to claim 2, **characterized in that** the colouring pigments fixed thermally to the grains of "base" powder paint are smaller than 5 µm in size.

4. A method according to claim 1, **characterized in that** it comprises at least the functional steps of:
- picking the "base" powder paint and the colouring pigments; and
- mixing and thermally fixing the colouring pigments to the grains of "base" powder paint.

5. A method according to claim 4, **characterized in that** it comprises a further functional step of producing the "base" powder paint immediately prior to picking the amount thereof to which to fix thermally the colouring pigments.

6. A method according to claim 1 or 4, **characterized in that** the colouring pigments are fixed thermally to the grains of the "base" powder paint by means of heat fixation and simultaneous shaking.

7. A method according to claim 4, **characterized in that** the amounts of "base" powder paint and colouring pigments picked up are those required to produce the colour and amount of powder paint required by the client.
